# EUROPEAN PATENT APPLICATION

(11) **EP 3 889 219 A1**
(43) Date of publication of application: **06.10.2021**
(21) Application number: 19905596.3
(22) Date of filing: 28.11.2019
(51) Int. Cl.: C08L 69/00

(54) **POLYCARBONATE COMPOSITION, PREPARATION METHOD THEREFOR AND USE THEREOF**

(30) Priority: 25.12.2018 CN 201811589524
(71) Applicant: KINGFA SCI. & TECH. CO., LTD., Guangzhou, Guangdong 510663 (CN)
(72) Inventor: CEN, Yin, Guangzhou, Guangdong 510663 (CN); WU, Jun, Guangzhou, Guangdong 510663 (CN); HUANG, Xianbo, Guangzhou, Guangdong 510663 (CN); YE, Nanbiao, Guangzhou, Guangdong 510663 (CN); ZHAO, Tipeng, Guangzhou, Guangdong 510663 (CN); AI, Junwei, Guangzhou, Guangdong 510663 (CN); CHEN, Yongwen, Guangzhou, Guangdong 510663 (CN); DONG, Xiangmao, Guangzhou, Guangdong 510663 (CN)
(74) Representative: dompatent von Kreisler Selting Werner - Partnerschaft von Patent- und Rechtsanwälten mbB
(86) International application number: PCT/CN2019/121727
(87) International publication number: WO 2020/134843

(57) **Abstract**

The present discloses a polycarbonate composition, including 100 parts of a polycarbonate in parts by weight; wherein based on a total weight percentage of the polycarbonate, the polycarbonate consists of 10% to 40% of a first polycarbonate with a weight average molecular weight of 18,000 to 25,000, 20% to 60% of a second polycarbonate with a weight average molecular weight of 27,000 to 35,000, and 20% to 60% of a third polycarbonate with a degree of branching of 2 to 7 and a weight average molecular weight of 25,000 to 30,000. The polycarbonate composition has the advantages of high transparency, good extrusion melt uniformity, etc.

## Description

### TECHNICAL FIELD

The present invention relates to the technical field of polymer composite materials, and particularly relates to a polycarbonate composition and a preparation method and an application thereof.

### BACKGROUND

At present, polycarbonate (PC) is widely used in a production of a variety of industrial and civil parts (such as a variety of transparent parts, lampshades, and instrument panels).

A high-viscosity polycarbonate has good toughness, but its low flowability results in poor processability. A well-known method is to add a low-molecular-weight polyester substance to improve overall flowability. However, this method to improve flowability results in that other components in the composition, such as a filler and a flame retardant, are not easy to be uniformly dispersed in an overall composition system due to self-polymerization, having non-uniform flowability during a melt extrusion process, thus finally causing poor melt uniformity and relatively poor toughness of the product, and a poor corresponding flame retardant effect and a relatively poor overall performance. Further, due to the poor melt uniformity, there will be some entanglements between polycarbonate chain segments, forming a large number of tiny voids, i.e. free volumes. Due to the existence of countless free volumes with different refractive indices, a transmittance of the material is low.

### SUMMARY

An objective of the present invention is to overcome the above technical defects and provide a polycarbonate composition having the advantages of high transparency, good extrusion melt uniformity, etc.

Another objective of the present invention is to provide a preparation method of the above-mentioned polycarbonate composition and an application thereof.

The present invention is realized by the following technical solutions.

A polycarbonate composition includes 100 parts of a polycarbonate in parts by weight; wherein based on a total weight percentage of the polycarbonate, the polycarbonate consists of 10% to 40% of a first polycarbonate with a weight average molecular weight of 18,000 to 25,000, 20% to 60% of a second polycarbonate with a weight average molecular weight of 27,000 to 35,000, and 20% to 60% of a third polycarbonate with a degree of branching of 2 to 7 and a weight average molecular weight of 25,000 to 30,000.

The polycarbonate can be prepared by an interface reaction of an inert solvent of phosgene with a certain amount of a dihydric phenol or an aqueous alkaline solution of a combination of dihydric phenols, typically in the presence of one or more catalysts, or by a transesterification of one or more aromatic dihydroxy compounds with a carbonate diester. The one or more dihydroxy aromatic compounds that may be used in the transesterification may include a dihydric phenol, or a combination of dihydric phenols, or a bisphenol, or a combination of bisphenols, or a combination of one or more dihydric phenols and one or more bisphenols. As would be realized by those of ordinary skill in the art, common examples of the dihydric phenols include but are not limited to resorcinol, catechol, hydroquinone, or 2-methylhydroquinone and the like. Examples of the bisphenols include but are not limited to bisphenol A (BPA), 4,4'-dihydroxybiphenyl, 1,1-bis (4-dihydroxy-3-methylphenyl) cyclohexane, 4,4'-(1-phenylethyfidene) bisphenol, 4,4'-dihydroxydiphenylsulfone, 4,4' -cyclohexylidene bisphenol and the like. Similarly, a common carbonate diester reactant includes a diaryl carbonate such as diphenyl carbonate (DPC), or an activated diaryl carbonate such as bis(methyl salicyl)carbonate (BMSC).

The weight average molecular weight of the polycarbonate can be controlled by adding a molecular chain regulator having a certain functional group. The molecular chain regulator such as a phenolic compound or an alkylphenol, especially one or a combination of phenol, p-tertiary phenol, cumylphenol, isooctylphenol, etc., is added at a specific point in time during a polymerization reaction process to control a weight average molecular weight of a final product.

The degree of branching refers to a number of branching points per unit volume or an average relative molecular weight of the branching points.

A branched polycarbonate is a mixture of organic compounds with multiple functional groups of hydroxyl group, carboxyl group, carboxylic acid anhydride, haloformyl group, and the above functional groups, which are added during polymerization. Specifically, trimellitic acid, trimellitic anhydride, trimellitic trichloride, tris(p-hydroxyphenyl)ethane, isatin bisphenol, triphenol TC (1,3,5-tris((p-hydroxyphenyl)isopropyl)benzene), triphenol PC (4(4(1,1-bis(p-hydroxyphenyl)-ethyl)alpha, alpha-dimethylbenzyl)phenol), 4-chloroformylphthalic anhydride, trimesic acid, benzophenone tetracarboxylic acid, 1,1,1-tris(hydroxyphenyl)ethane (THPE), triethylamine, etc. may be included. The above-mentioned organic compounds with multiple functional groups are also referred to as a branching agent.

A preparation method of the branched polycarbonate may be introducing a branching agent as an ingredient dissolved in a solvent to a melt process. Firstly, the branching agent is dissolved in the solvent, the branching agent which typically exhibits a relatively high melting point can be introduced as a reactant to the melt polymerization process without an increased energy amount typically required to melt a monomer of the branching agent, such that it is in a molten state during the melt process before it reacts with other polycarbonate to form a reactant.

The branching agent may be pre-added to an alkaline aqueous phase with a diphenol and a molecular weight regulator according to a predetermined ratio, or dissolved in an organic phase. An additive amount of the branching agent may be calculated based on an amount of degree of branching desired for the final branched polycarbonate, or a terminating agent or an end-capping agent may be added during the reaction process to carry out a terminal reaction.

In the present invention, the first polycarbonate and the second polycarbonate may be linear or branched. Preferably, the first polycarbonate and the second polycarbonate are linear.

Further preferably, the polycarbonate is selected from a polycarbonate synthesized by an interface method. Since the polycarbonate synthesized by the interface method uses phosgene, a characteristic peak of chloride ion can be detected according to the following polycarbonate volatile test method.

The polycarbonate volatile test method includes the following steps:
step A, taking a powdered or granular polycarbonate into a desorption tube, and sealing the desorption tube;
step B, placing the sealed desorption tube in a thermal desorber for desorption and enrichment of a volatile; and
step C, introducing the desorbed volatile into a gas chromatograph-mass spectrometer for detection, and analyzing peak time, number of peaks, and characteristic peak.

In order to accurately enrich the volatile in the polycarbonate, in the step B, a temperature of the desorption and the enrichment is 100°C to 140°C and time for the desorption and the enrichment is 1 hour to 3 hours. If the temperature of the desorption is too high, some structurally unstable ingredients will undergo irreversible changes, which will affect judgment of the final result. If the temperature of the desorption is too low, the volatile, such as phenol, is unable to be volatized sufficiently.

Preferably, in the step B, the temperature of the enrichment is 30°C to 50°C lower than the temperature of the desorption. That the temperature of the enrichment is 30°C to 50°C lower than the temperature of the desorption is for a complete retention of all the components.

In the step C, a preferred chromatographic column of the gas chromatograph-mass spectrometer is a siloxane chromatographic column, having a maximum column temperature up to 300°C, an eluting temperature of 25°C to 300°C and eluting time of 30 minutes to 90 minutes. For a column of polysiloxane with a certain phenyl content, a volatile substance of polycarbonate is not easy to have tails, and siloxanes have a good separation effect.

To further improve a transparency, in parts by weight, 0.01 part to 4 parts of a lubricant is further included. The lubricant is selected from at least one of a stearic acid salt lubricant, a fatty acid lubricant, and a stearate lubricant. The stearic acid salt lubricant is selected from at least one of calcium stearate, magnesium stearate, and zinc stearate. The fatty acid lubricant is selected from at least one of a fatty acid, a fatty acid derivative, and a fatty acid ester. The stearate lubricant is selected from at least one of glyceryl monostearate and pentaerythritol stearate.

Preferably, the lubricant is selected from at least one of the stearate lubricant.

In parts by weight, 0 parts to 5 parts of at least one of an antioxidant and a weather-resistant agent is further included.

A transmittance of the polycarbonate composition indicates a refractive index of a microstructure inside the material as well as a number and a dispersion degree of a low light transmission structure. If the refractive index of the microstructure inside the material is uniform, and the low light transmission structure is less and evenly distributed, an overall transmittance of the material is high.

A preparation method of preparing the above-mentioned polycarbonate composition includes the following steps: evenly mixing the polycarbonate and the lubricant according to a ratio in a high-speed mixer, then adding into a twin-screw extruder, performing melt mixing at a temperature of 240°C to 260°C, and then granulating, cooling, and drying to obtain the polycarbonate composition.

The present invention has the following beneficial effects.

According to the present invention, by adding the third polycarbonate having the degree of branching of 2 to 7 and the weight average molecular weight of 25,000 to 30,000, a defect of poor melt uniformity of a product after mixing a low-viscosity polycarbonate and a high-viscosity polycarbonate are solved, and since the third polycarbonate has a certain degree of branching, a free volume inside the material is filled evenly, a phenomenon that the refractive index of the material internal structure is not uniform is reduced or even eliminated, and thus the transparency is increased (the transparency is a comprehensive index of a transmittance and a haze, and the higher the transparency is and the lower the haze is, the higher the transmittance is).

### DETAILED DESCRIPTION

The present invention is further illustrated by the following embodiments, but the present invention is not limited by the following embodiments.

Sources of raw materials used in the present invention are as follows, but the present invention is not limited by the following raw materials.
First polycarbonate A: with a weight average molecular weight of 20,000, linear, synthesized by an interface method;
first polycarbonate B: with a weight average molecular weight of 20,000 and a degree of branching of 5, synthesized by an interface method;
second polycarbonate: with a weight average molecular weight of 33,000, linear, synthesized by an interface method;
third polycarbonate: with a weight average molecular weight of 27,000 and a degree of branching of 5, synthesized by an interface method;
polycarbonate C: with a weight average molecular weight of 27,000, without branching, synthesized by an interface method;
lubricant A: glyceryl monostearate, Fine Organic, a stearate lubricant;
lubricant B: zinc stearate phosphate, Fine Organic, a stearic acid salt lubricant;
antioxidants: ADEKA 2112, Adeka.

A preparation method of a polycarbonate composite material in Embodiments and Comparative Examples: a polycarbonate, a lubricant and an antioxidant were mixed evenly according to a ratio in a high-speed mixer; then added into a twin-screw extruder, melt mixed at a temperature of 240°C to 260°C, and then granulated, cooled and dried to obtain the polycarbonate composite material.

Each performance test methods:
(1) Transmittance: the material was injection molded at 300°C into a 100mm^{∗} 100mm test sample plate with a thickness of 1mm. After a state adjustment of 40 hours according to IS0291 under an environment with a temperature of 23°C and a relative humidity of 50%, an experiment was carried out. Before a test, an instrument needed to be preheated for 10 minutes, the test sample plate was placed in a sample tank, three different positions were tested, transmittance data were recorded, and an average value was calculated.
(2) Haze: the material was injection molded at 300°C into a 100mm^{∗} 100mm test sample plate with a thickness of 1mm. After a state adjustment of 40 hours according to IS0291 under an environment with a temperature of 23°C and a relative humidity of 50%, an experiment was carried out. Before a test, an instrument needed to be preheated for 10 minutes, the test sample plate was placed in a sample tank, three different positions were tested, haze data were recorded, and an average value was calculated.
(3) Extrusion melt uniformity: A 600 mesh filter screen was added at an extrusion screw mouth mold and the uniformity was evaluated by a fluctuation of an extrusion pressure. The smaller the value is, the better the extrusion melt uniformity is.

**Table 1: Each component and ratio (in parts by weight) and each performance test results of Embodiments 1 to 8**

| | | Embodiment 1 | Embodiment 2 | Embodiment 3 | Embodiment 4 | Embodiment 5 | Embodiment 6 | Embodiment 7 | Embodiment 8 |
|---|---|---|---|---|---|---|---|---|---|
| P C | First polycarbonate A | 10 | 10 | 20 | 20 | 30 | - | 20 | 20 |
| | First polycarbonate B | - | - | - | - | - | 20 | - | - |
| | Second polycarbonate | 30 | 45 | 40 | 30 | 50 | 30 | 30 | 30 |
| | Third polycarbonate | 60 | 45 | 40 | 50 | 20 | 50 | 50 | 50 |
| Lubricant A | | 0.2 | 0.2 | 0.2 | 0.2 | 0.2 | 0.2 | - | - |
| Lubricant B | | - | - | - | - | - | - | - | 0.2 |
| Antioxidant | | 0.3 | 0.3 | 0.3 | 0.3 | 0.3 | 0.3 | 0.3 | 0.3 |
| Transmittance, % | | 91.1 | 90.0 | 89.7 | 88.2 | 86.2 | 85.1 | 83.1 | 84.3 |
| Haze, % | | 0.2 | 0.4 | 0.5 | 0.8 | 0.92 | 1.2 | 1.1 | 1.9 |
| Extrusion melt uniformity, % | | 2.3 | 3.8 | 3.3 | 3.8 | 4.2 | 5.5 | 4.7 | 5.1 |

It can be seen from Embodiment 4 or 6 that when the first polycarbonate is linear, the transparency and the extrusion melt uniformity are both better.

It can be seen from Embodiment 7 or 8 and Embodiment 4 that an addition of the lubricant not only increases the extrusion melt uniformity but also increases the transparency to a certain degree; and the preferred lubricant has a better improvement of the transparency effect and the extrusion melt uniformity.

**Table 2: Each component and ratio (in parts by weight) and each performance test results of Comparative Examples 1 to 7**

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| P C | First polycarbonate A | 20 | 20 | - | - | - | 100 | - |
| | First polycarbonate B | - | - | - | - | - | - | 20 |
| | Second polycarbonate | 80 | - | 50 | - | 100 | - | 30 |
| | Third polycarbonate | - | 80 | 50 | 100 | - | - | - |
| | Polycarbonate C | - | - | - | - | - | - | 50 |
| Lubricant A | | 0.2 | 0.2 | 0.2 | 0.2 | 0.2 | 0.2 | 0.2 |
| Antioxidant | | 0.3 | 0.3 | 0.3 | 0.3 | 0.3 | 0.3 | 0.3 |
| Transmittance, % | | 80.8 | 79.1 | 79.4 | 75.3 | 74.3 | 72.8 | 73.3 |
| Haze, % | | 2.2 | 2.4 | 2.7 | 2.8 | 3.3 | 2.8 | 3.2 |
| Extrusion melt uniformity, % | | 3.3 | 5.4 | 6.5 | 9.2 | 7.7 | 10.2 | 15.4 |

It can be seen from Embodiment 4 and Comparative Examples 1 to 6 that regardless of whether the three polycarbonates are pairwise compounded or added solely, each performance is poor, and a compounding of the three polycarbonates is required to achieve a good performance.

It can be seen from Comparative Example 7 that if the third polycarbonate is linear, each performance of the product is poor, and even if the first polycarbonate has the degree of branching, it cannot function as the third polycarbonate.

## Claims

1. A polycarbonate composition, **characterized in** comprising 100 parts of a polycarbonate in parts by weight; wherein based on a total weight percentage of the polycarbonate, the polycarbonate consists of 10% to 40% of a first polycarbonate with a weight average molecular weight of 18,000 to 25,000, 20% to 60% of a second polycarbonate with a weight average molecular weight of 27,000 to 35,000, and 20% to 60% of a third polycarbonate with a degree of branching of 2 to 7 and a weight average molecular weight of 25,000 to 30,000.

2. The polycarbonate composition according to claim 1, **characterized in that**, the first polycarbonate and the second polycarbonate are linear.

3. The polycarbonate composition according to claim 2, **characterized in that**, the polycarbonate is selected from a polycarbonate synthesized by an interface method.

4. The polycarbonate composition according to claim 1, **characterized in that**, in parts by weight, 0.01 part to 4 parts of a lubricant is further comprised; the lubricant is selected from at least one of a stearic acid salt lubricant, a fatty acid lubricant, and a stearate lubricant; the stearic acid salt lubricant is selected from at least one of calcium stearate, magnesium stearate, and zinc stearate; the fatty acid lubricant is selected from at least one of a fatty acid, a fatty acid derivative, and a fatty acid ester; the stearate lubricant is selected from at least one of glyceryl monostearate and pentaerythritol stearate.

5. The polycarbonate composition according to claim 4, **characterized in that**, the lubricant is selected from at least one of the stearate lubricant.

6. The polycarbonate composition according to claim 1, **characterized in that**, in parts by weight, 0 parts to 5 parts of at least one of an antioxidant and a weather-resistant agent is further comprised.

7. A preparation method of preparing the polycarbonate composition of claim 4, **characterized in** comprising the following steps: evenly mixing the polycarbonate and the lubricant according to a ratio in a high-speed mixer, then adding into a twin-screw extruder, performing melt mixing at a temperature of 240°C to 260°C, and then granulating, cooling, and drying to obtain the polycarbonate composition.

8. An application of the polycarbonate composite material of any one of claims 1 to 6, **characterized in** for a preparation of a transparent part.
